# DEMANDE DE BREVET EUROPEEN

(11) **EP 1 533 203 A1**
(43) Date de publication de la demande: **25.05.2005**
(21) Numéro de dépôt: 04300780.6
(22) Date de dépôt: 10.11.2004
(51) Int. Cl.: B60T 7/10, G05G 1/04

(54) **Commande de frein de parking excentrée**

(30) Priorité: 21.11.2003 FR 0313681
(71) Demandeur: Renault, 92109 Boulogne Billancourt (FR)
(72) Inventeur: Braud, André, 78770, Villiers le Mahieu (FR)

(57) **Abrégé**

L'invention concerne une commande de frein (18) de parking comportant un levier (22) pivotant qui présente une extrémité de traction (28) et une extrémité commandable (32), ledit levier (22) étant susceptible d'être entraîné avec une force F, d'une position de repos vers une position de freinage. La commande comprend en outre : un organe de commande (34) s'étendant longitudinalement selon un axe moyen et présentant, une extrémité (36) articulée sur l'extrémité commandable (32) et une extrémité opposée, ledit axe moyen et ledit levier (22) formant un angle aigu (α) dans ladite position de repos; et, une biellette de guidage (42) articulée sur ledit organe de commande (34) et sur un point d'articulation (47), maintenu en position fixe. L'entraînement de l'extrémité opposée parallèlement audit axe moyen, provoque l'entraînement dudit levier (22) avec un moment de force F croissant entre ladite position de repos et ladite position de freinage.

## Description

La présente invention se rapporte à une commande de frein de parking pour véhicule automobile.

On connaît des commandes de ce type, plus communément appelées « frein à main », qui comprennent un levier monté à pivotement autour d'un point fixe situé entre des sièges avant d'un véhicule automobile, lequel levier présente une extrémité de traction d'un câble étendu dans une direction orientée vers l'arrière du véhicule et une extrémité commandable orientée dans une direction opposée, vers l'avant du véhicule.

De la sorte, un conducteur du véhicule normalement installé sur un des sièges est susceptible d'entraîner ledit levier en rotation, en saisissant ladite extrémité commandable et en la tirant vers lui après avoir éventuellement déverrouillé des moyens de blocage qui sont adaptés à prendre appui contre un élément de la garniture intérieure du véhicule, de manière à entraîner en traction ledit câble. Ledit câble est directement relié à des moyens de serrage ou de frottement contre des organes circulaires solidaires des arbres de roulement des roues.

Outre que la position dudit levier entre les sièges occupe une zone dans laquelle on souhaite adapter des espaces de rangement, la variation de l'effort de commande selon une force F en fonction de la course dudit levier, entre une position de repos et une position de freinage est une fonction linéaire ou sinusoïdale imposée par la géométrie dudit levier qui laisse très peu de marge de manoeuvre pour faire varier ce rapport effort/course.

Un problème qui se pose et que vise à résoudre la présente invention, est alors de proposer une commande de frein qui permette non seulement de libérer de l'espace entre les deux sièges sans pour autant modifier substantiellement ni la position de la poignée de commande de frein ni le mouvement à opérer pour la commander, mais aussi de pouvoir faire varier ledit rapport effort/course.

Dans ce but et selon un premier objet, la présente invention propose une commande de frein de parking pour véhicule automobile, comportant un levier pivotant autour d'un point fixe et qui présente une extrémité de traction et une extrémité commandable orientée dans une première direction du véhicule, ledit levier étant susceptible d'être entraîné dans une seconde direction opposée avec une force F, d'une position de repos vers une position de freinage ; ladite commande comprenant en outre : un organe de commande s'étendant longitudinalement selon un axe moyen et présentant, une extrémité montée articulée sur ladite extrémité commandable et une extrémité opposée formant poignée s'étendant dans ladite seconde direction, ledit axe moyen et ledit levier formant un angle aigu dans ladite position de repos ; et, une biellette de guidage dudit organe de commande montée articulée sur ledit organe de commande et sur un point d'articulation, maintenu en position fixe par rapport audit point fixe, ledit levier, ledit organe de commande, ladite biellette et un segment reliant ledit point fixe et ledit point d'articulation, formant un quadrilatère déformable ; et l'entraînement de ladite poignée dans une direction sensiblement parallèle audit axe moyen, provoquant l'entraînement dudit levier avec un moment de force F croissant entre ladite position de repos et ladite position de freinage.

Ainsi, une caractéristique de l'invention réside dans le mode de coopération de l'organe de commande et du levier qui permet d'une part de déporter le levier vers l'avant du véhicule et ainsi de libérer en partie l'espace qui s'étend entre les deux sièges et d'autre part, de rendre très progressif le rapport effort/force avec une grande marge de manoeuvre, Alors que selon l'art antérieur, en début de course dudit levier, au voisinage de ladite position de repos, l'effort à appliquer était peu important, mais qu'il le devenait ensuite, grâce à l'invention, l'effort est réparti de façon plus uniforme sur toute la course du levier. En outre, une autre caractéristique réside dans le mode de coopération de la biellette de guidage avec ledit organe de commande qui permet de former un quadrilatère déformable de telle sorte que ladite poignée puisse décrire durant sa course une courbe circulaire semblable à celle que décrit l'extrémité commandable à la main des freins de parking selon l'art antérieur.

Selon un mode de mise en oeuvre de l'invention particulièrement avantageux, la commande de frein de parking comprend des moyens élastiques adaptés à emmagasiner de l'énergie lorsque ledit levier est entraîné de ladite position de repos vers une position intermédiaire et à restituer ladite énergie lorsqu'il est entraîné de ladite position intermédiaire vers ladite position de freinage. Ainsi, entre ladite position de repos et ladite position intermédiaire que l'on définira dans la suite de la description, où le levier entraîne le câble en traction avec une tension croissante mais initialement sensiblement nulle et donc avec un effort moins important que celui qui correspond à la position de freinage, on emmagasine de l'énergie dans des moyens élastiques. De la sorte, entre ladite position intermédiaire et la position de freinage où la tension sur le câble croît plus encore et en conséquence où l'effort sur le levier doit être plus important, les moyens élastiques contribuent au moins partiellement à cet effort et soulage le conducteur qui exerce une traction sur la poignée.

Ainsi, la courbe d'effort par rapport à la course de l'organe de commande présente-t-elle une pente moyenne plus faible que celle du levier, conformément à l'art antérieur.

Avantageusement, lesdits moyens élastiques comportent un ressort cylindrique de traction s'étendant longitudinalement selon un axe et dont une extrémité est montée sur ledit levier entre ledit point fixe et ladite extrémité commandable et dont l'autre extrémité est montée dans une direction opposée à ladite extrémité commandable, à distance audit point fixe, ledit axe étant écarté dudit point fixe dans ladite position de repos ; et ledit ressort est étendu lorsque ledit levier est entraîné vers ladite position intermédiaire de façon que ledit axe coupe sensiblement ledit point fixe. De la sorte, en ajustant ledit levier et ledit organe de commande de façon que dans ladite position intermédiaire, le couple exercé sur ledit levier par ledit organe de commande soit sensiblement maximal et que la traction à exercer sur le câble ne soit pas, elle, encore maximale, l'essentiel de l'effort contribue à stocker de l'énergie dans le ressort. Et, lorsque le ressort est étendu de façon que son axe coupe ledit point fixe, il a emmagasiné la quantité d'énergie maximale. A partir de cette position intermédiaire, le ressort va pouvoir restituer une partie de cette énergie pour que le levier puisse être porté aisément dans ladite position de freinage.

De façon avantageuse, la commande de frein de parking comprend des moyens de blocage, adaptés à bloquer en rotation ledit organe de commande et ladite biellette de guidage dans ladite position de freinage. Ainsi, les moyens de blocage permettent de maintenir la commande de frein dans ladite position de freinage, indépendamment de la garniture intérieure du véhicule. De la sorte, le mode de liaison de ladite commande de frein et du vèhicule est simplifié.

Selon un second objet, la présente invention propose une console de véhicule automobile s'étendant sur un plancher entre un tableau de bord et un espace situé entre deux sièges avant, ladite console comprenant une commande de frein de parking telle que décrite ci-dessus, montée vers ledit tableau de bord de façon que ladite poignée qui s'étend sensiblement à l'aplomb dudit espace situé entre les deux sièges avant, soit susceptible de décrire une courbe dont le centre de courbure est situé entre lesdits sièges avant au voisinage dudit plancher.

Ainsi, non seulement ledit espace situé entre les deux sièges est libre pour recevoir des éléments de rangement mais aussi, la poignée est adaptée à être entraînée, comme pour une poignée de commande selon l'art antérieur, en rotation en exerçant une traction dans la direction de l'épaule du passager normalement installé, au bénéfice de l'ergonomie.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en élévation latérale d'un mode de réalisation d'une commande de frein de parking conforme à l'invention dans une position de repos ;
- la Figure 2 est une vue schématique de la commande de frein illustrée sur la Figure 1 dans une position de freinage ; et,
- la Figure 3 est une vue schématique de la commande de frein illustrée sur la Figure 1 dans une position intermédiaire ;

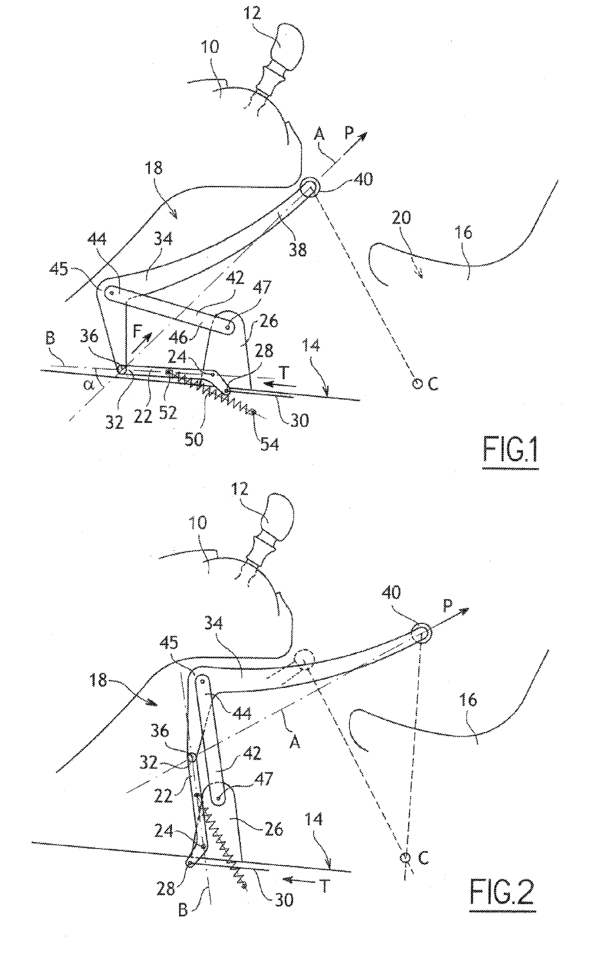

La Figure 1 illustre une portion d'habitacle d'un véhicule automobile comportant une planche de bord 10 dans laquelle est monté un levier de commande des vitesses 12 et qui surplombe un plancher 14, Deux sièges avant 16 sont installés en regard de la planche de bord 10.

Une commande de frein de parking 18, conforme à l'invention, est installée dans l'axe central du véhicule automobile passant entre les deux sièges avant 16 et décalée vers la planche de bord 10 de façon à laisser un espace libre 20 entre les deux sièges 16, notamment pour aménager des moyens de rangement.

La commande de frein de parking 18 comprend un levier 22 monté à pivotement autour d'un point fixe 24. Ce point fixe 24 est formé d'un axe qui relie deux platines en regard solidaires du plancher 14. Une seule des platines, 26 apparaît sur la Figure. Ledit axe s'étend transversalement à la base des platines 26 et le levier 22 est monté pivotant sur ledit axe.

Le levier 22 présente une extrémité de traction 28 d'un câble de traction 30 étendu vers l'arrière du véhicule automobile et une extrémité commandable 32 opposée à l'extrémité de traction 30 par rapport au point fixe 24 et étendue vers l'avant du véhicule. Afin que le levier 22 constitue un bras de levier suffisant, compte tenu des forces de traction à exercer sur le câble 30 et de la résistance mécanique des pièces de la commande de frein 18, la distance qui sépare le point fixe 24 de l'extrémité commandable 32 est comprise entre 2 et 5 fois la distance qui sépare l'extrémité de traction 28 du point fixe 24, par exemple 3,5 fois. En outre, l'extrémité commandable 32 et l'extrémité de traction 28 forment par rapport au point fixe 24 un secteur angulaire sensiblement égal à 120°.

La commande de frein 18 comporte en outre, un organe de commande 34 en L qui s'étend longitudinalement selon un axe A et dont une première extrémité 36 est montée à pivotement sur l'extrémité commandable 32 du levier 22, tandis qu'une seconde extrémité 38 libre, se termine par une poignée 40. L'organe de commande 34 est orienté vers l'arrière du véhicule, incliné par rapport au plancher 14, la poignée 40 en direction des sièges 16 de façon que l'axe A et un axe B qui coupe l'extrémité commandable 32 et le point fixe 24 forment un angle aigu α, compris entre 20 et 60°, par exemple 45°. L'organe de commande 34 est maintenu dans cette position inclinée grâce à une biellette de guidage 42, dont une extrémité 44 est montée articulée sur l'organe de commande 34 sensiblement à la jointure 45 entre les deux portions du L, alors qu'une autre extrémité opposée 46 est, elle, montée articulée à l'extrémité des platines 26 autour d'un pivot 47. Ce pivot 47 est, selon un mode de mise en oeuvre particulier, maintenu entre les platines 26 selon un axe parallèle audit axe du point fixe 24.

La biellette 42 est sensiblement parallèle au levier 22 et elle forme avec les platines 26 d'un côté et l'organe de commande 34 de l'autre, particulièrement la portion qui s'étend entre la première extrémité 36 et la jointure 45, un quadrilatère déformable, seuls le pivot 47 et le point fixe 24 étant maintenue en position fixe.

Telle que représentée sur la Figure 1, la commande de frein 18 est en position de repos, la première extrémité 36 et l'extrémité commandable 32 étant en appui au voisinage du plancher 14, et elle est maintenue dans cette position, notamment grâce à un ressort cylindrique de traction 50. Le ressort 50, est légèrement tendu entre une extrémité mobile 52 montée à pivotement sur le levier 22 entre le point fixe 24 et l'extrémité commandable 32 et une extrémité d'arrêt 54, située en dessous du niveau du plancher 14 dans une direction opposée à l'extrémité commandable 32 par rapport au point fixe 24. Le ressort 50 est écarté du point fixe 24, vers le plancher 14 et il s'étend librement dans un espace prévu à cet effet qui traverse le plancher 14. Dans cette position, il tend à entraîner le levier 22 en direction du plancher 14.

A partir d'une telle position, l'entraînement de l'organe de commande 34 au moyen de la poignée 40 sur laquelle on exerce une force P orientée sensiblement dans la direction de l'axe A, provoque la rotation du levier 22 par l'action d'une force F sur l'extrémité commandable 32. Compte tenu de la géométrie du quadrilatère déformable et des contraintes qui sont exercées essentiellement sur le levier 22 par le ressort 50 et le câble de traction 30, la force F est sensiblement parallèle à l'axe A de l'organe de commande 34 et d'une intensité voisine de celle de P qui est exercée sur la poignée.

Ainsi, à partir de cette position de repos, la force F d'action sur le levier 22 qui forme alors un angle aigu avec l'axe B du levier 22, contribue essentiellement à l'extension du ressort 50 car, le câble de traction 30 qui est entraîné vers l'avant selon T par l'extrémité de traction 28 est alors dans une phase de traction peu résistante, et le moment de cette force F qui est minimal dans la position de repos tend à s'accroître lorsque le levier 22 pivote.

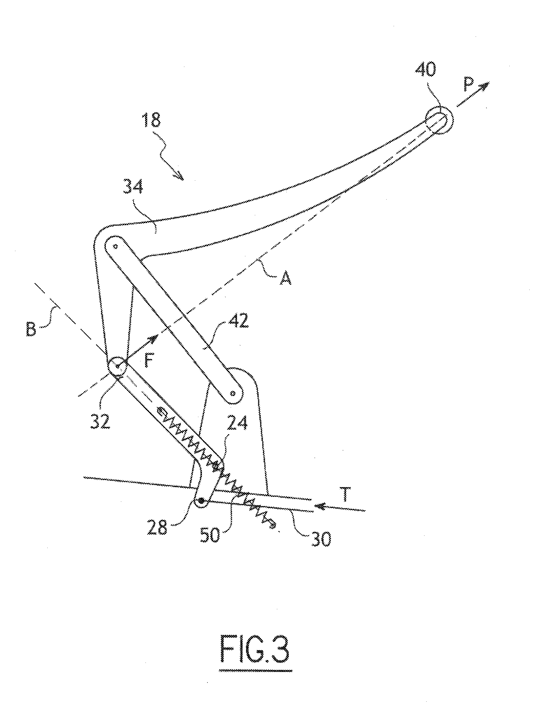

Le déplacement de l'organe de commande 34 est susceptible de se poursuivre, par l'action de la force P sur la poignée 40 jusqu'à une position intermédiaire illustrée sur la Figure 3 et à laquelle on se référera à présent.

On retrouve sur cette Figure 3 tous les éléments de la commande de frein 18. Dans cette position particulière, d'une part le ressort 50 s'étend suivant l'axe B qui coupe l'extrémité commandable 32 et le point fixe 24, il est alors dans sa position d'extension maximale et d'autre part l'axe A de l'organe de commande 34 est sensiblement perpendiculaire à l'axe B de sorte que le moment de la force F sur l'extrémité commandable 32 est sensiblement maximal.

Ainsi, depuis la position de repos, jusqu'au voisinage de cette position intermédiaire, où la force P d'actionnement de la poignée est la plus efficace puisque le moment de F est sensiblement maximal, le travail de la force P a essentiellement permis, de tendre le ressort 50 et accumuler de l'énergie potentielle et dans une moindre mesure, d'entraîner en traction selon T le câble de traction 30 alors dans une phase de moindre résistance.

En outre, l'intensité de la force P est légèrement progressive durant cette première phase, entre la position de repos et la position intermédiaire, car le moment de la force F s'accroît au fur et à mesure que le ressort 50 se tend. De la sorte, F est de plus en plus efficace alors que de plus en plus d'énergie est nécessaire pour tendre le ressort 50.

Cette énergie ainsi accumulée dans le ressort 50, dans une phase du mouvement où peu d'énergie est nécessaire à l'entraînement du câble de traction 30, sera en partie restituée dans la phase suivante du mouvement que l'on décrira en référence à la Figure 2 et dans laquelle plus d'énergie est nécessaire pour entraîner le câble 30.

On retrouve sur cette Figure 2 la commande de frein 18, dans l'axe central du véhicule comme sur la Figure 1, mais dans une position de freinage où l'organe de commande 34 a permis d'entraîner le levier 22 en pivotement dans une position limite dans laquelle le câble de traction 30, lui, est entraîné dans une position de blocage en rotation au moins de roues arrière.

En partant de la position intermédiaire illustrée sur la Figure 3, tandis que la force P permet d'entraîner encore l'organe de commande 34 et où le moment de la force F est sensiblement maximal, le ressort 50 commence à restituer l'énergie qu'il avait accumulée en se rétrécissant et en s'écartant du point fixe 24. Ainsi, cette énergie restituée qui tend à entraîner en pivotement le levier 22, s'additionne à celle qui est fournie par la force P d'actionnement de la poignée 40 et contribue à l'entraînement en traction du câble 30 selon T dans une phase où sa résistance est plus importante, ce qui soulage le conducteur opérateur.

Ainsi, depuis la position de repos jusqu'à la position de freinage, l'intensité de la force P d'actionnement de la poignée 40 est elle légèrement progressive, plus importante dans la première phase entre la position de repos et la position intermédiaire, par rapport à une même course d'un levier selon l'art antérieur, mais moins importante dans la seconde phase, de la position intermédiaire à la position de freinage, toujours pour la course correspondante d'un levier selon l'art antérieur. Cela permet un plus grand confort pour l'opérateur.

En outre, grâce à la biellette de guidage 42, entre la position de repos et la position de freinage, la poignée 40 décrit une courbe dont le centre de courbure C est situé entre les sièges 16 au voisinage du plancher 14 ce qui correspond à une trajectoire de la poignée 40 tout à fait ergonomique allant de la main à l'épaule de l'opérateur.

Afin de maintenir l'organe de commande 34 dans la position de freinage, la commande de frein 18 comporte des moyens de blocage, non représentés, de la biellette de guidage 42 et de l'organe de commande.

Ces moyens de blocage, selon un mode particulier de mise en oeuvre, sont constitués d'un secteur cranté solidaire de la biellette de guidage et dont le centre correspond au point d'articulation entre l'extrémité de la biellette et la jointure de l'organe de commande, et d'un cliquet monté pivotant sur l'organe de commande et en appui contre le secteur cranté.

Ainsi, dans ladite position de freinage, la rotation de la biellette de guidage vers l'organe de commande est adaptée à être bloquée en encliquetant ledit cliquet dans un cran dudit secteur, ce qui maintient en position de freinage la commande de frein.

## Revendications

1. Commande de frein (18) de parking pour véhicule automobile, comportant un levier (22) pivotant autour d'un point fixe (24) et qui présente une extrémité de traction (28) et une extrémité commandable (32) orientée dans une première direction du véhicule, ledit levier (22) étant susceptible d'être entraîné dans une seconde direction opposée avec une force F, d'une position de repos vers une position de freinage, **caractérisée en ce qu'**elle comprend en outre :
- un organe de commande (34) s'étendant longitudinalement selon un axe moyen et présentant, une extrémité (36) montée articulée sur ladite extrémité commandable (32) et une extrémité opposée formant poignée (40) s'étendant dans ladite seconde direction, ledit axe moyen et ledit levier (22) formant un angle aigu (α) dans ladite position de repos; et,
- une biellette de guidage (42) dudit organe de commande (34) montée articulée sur ledit organe de commande (34) et sur un point d'articulation (47), maintenu en position fixe par rapport audit point fixe (24), ledit levier (22), ledit organe de commande (34), ladite biellette (42) et un segment reliant ledit point fixe (24) et ledit point d'articulation (47), formant un quadrilatère déformable ;
et **en ce que** l'entraînement de ladite poignée (40) dans une direction sensiblement parallèle audit axe moyen, provoque l'entraînement dudit levier (22) avec un moment de force F croissant entre ladite position de repos et ladite position de freinage.

2. Commande de frein de parking selon la revendication 1, **caractérisée en ce qu'**elle comprend des moyens élastiques (50) adaptés à emmagasiner de l'énergie lorsque ledit levier (22) est entraîné de ladite position de repos vers une position intermédiaire et à restituer ladite énergie lorsqu'il est entraîné de ladite position intermédiaire vers ladite position de freinage.

3. Commande de frein de parking selon la revendication 2, **caractérisée en ce que** lesdits moyens élastiques comportent un ressort (50) cylindrique de traction s'étendant longitudinalement selon un axe et dont une extrémité (52) est montée sur ledit levier (22) entre ledit point fixe (24) et ladite extrémité commandable (32) et dont l'autre extrémité (54) est montée dans une direction opposée à ladite extrémité commandable (32), à distance dudit point fixe (24), ledit axe étant écarté dudit point fixe (24) dans ladite position de repos ;
et **en ce que** ledit ressort (50) est étendu lorsque ledit levier (22) est entraîné vers ladite position intermédiaire de façon que ledit axe coupe sensiblement ledit point fixe (24).

4. Commande de frein de parking selon l'une quelconque des revendications 1 à 3, **caractérisée en ce qu'**elle comprend des moyens de blocage, adaptés à bloquer en rotation ledit organe de commande (34) et ladite biellette de guidage (42) dans ladite position de freinage.

5. Console de véhicule automobile s'étendant sur un plancher entre un tableau de bord et un espace (20) situé entre deux sièges avant (16), **caractérisée en ce qu'**elle comprend une commande de frein (18) de parking selon l'une quelconque des revendications 1 à 4, montée vers ledit tableau de bord de façon que ladite poignée (40) qui s'étend sensiblement à l'aplomb dudit espace (20) situé entre les deux sièges avant (16), soit susceptible de décrire une courbe dont le centre de courbure est situé entre lesdits sièges avant (16) au voisinage dudit plancher (14).
